Europäisches Patentamt

European Patent Office

Office européen des brevets

(19)

(11) Numéro de publication: **0 089 261**
**B1**

## FASCICULE DE BREVET EUROPÉEN

(12)

(45) Date de publication du fascicule du brevet:
**08.03.89**

(21) Numéro de dépôt: **83400422.8**

(22) Date de dépôt: **02.03.83**

(51) Int. Cl.⁴: **G 01 N 23/00,** G 01 N 23/05

(54) **Matériau de liaison pour l'assemblage par collage de pièces.**

(30) Priorité: **08.03.82 FR 8203845**

(43) Date de publication de la demande:
**21.09.83 Bulletin 83/38**

(45) Mention de la délivrance du brevet:
**08.03.89 Bulletin 89/10**

(84) Etats contractants désignés:
**AT BE CH DE FR GB IT LI LU NL SE**

(56) Documents cité:
**US-A-3 351 760**
**US-A-3 612 874**

(73) Titulaire: **CENTRE NATIONAL D'ETUDES
SPATIALES, 129, Rue de l'Université, F-75007
Paris (FR)**

(72) Inventeur: **Benoit, Jean, 11, Lot. la Pradelle,
F-31450 Montgiscard (FR)**

(74) Mandataire: **de Boisse, Louis Arnaud, CABINET de
BOISSE 37, Avenue Franklin D. Roosevelt,
F-75008 Paris (FR)**

EP 0 089 261 B1

LIBER, STOCKHOLM 1989

## Description

L'invention concerne un matériau de liaison, pour l'assemblage par collage de pièces, comprenant une dispersion de gadolinium dans une colle ou une résine à un ou plusieurs constituants, ladite dispersion permettant la détection d'éventuels défauts submillimétriques d'assemblage par neutronographie. Un tel matériau est connu du document US-A-3 351 760.

Le contrôle des soudures, brasures ou collages a pour but de déterminer la continuité du matériau d'assemblage déposé entre les deux pièces à réunir.

Généralement, le contrôle des assemblages métalliques par soudure ou brasure se fait par radiographie ou grammagraphie. Les résultats dépendent de l'absorption les métaux et de leurs épaisseurs relatives. La détection des zones de discontinuité est aléatoire et dépend des dimensions des défauts. L'emploi de la neutronographie a permis dans des ensembles complexes constitués de pièces métalliques et organiques la mise en évidence de ces dernières, alors que dans la radiographie, la forte absorption des pièces métalliques masquait celle des pièces moins absorbantes.

Le contrôle du collage de certaines pièces métalliques pose des problèmes encore plus ardus, car, étant donné la faible épaisseur de la colle, celle-ci se laisse traverser sans absorber le rayonnement et les éventuels défauts ne sont pas décelables.

Avec l'apparition des structures composites en résine fibre, utilisées principalement dans l'industrie aéronautique et spatiale, la réalisation de structures collées présentant un maximum de garantie aux contraintes d'environnement sévères, telles que température, vibrations, etc.., a fait appel à de nombreuses méthodes de contrôle. L'emploi des infrarouges, des ultrasons, de la radiographie ou de la xéroradiographie est, soit très onéreux ou de mise en oeuvre difficile, soit partiellement inefficace parce qu'offrant de faibles résolutions dimensionnelles ou ne permettant de détecter que des défauts importants: sur des structures fines, les contrôles de collage deviennent très difficiles ou inexistants parce qu'irréalisables dans certains cas.

On a également utilisé la neutronographie, de mise en oeuvre relativement facile et de faible coût, dont les caractéristiques sont l'observation au travers de fortes épaisseurs de matériaux et ce pour la plupart d'entre eux contrairement aux rayons X, et une meilleure résolution dimensionnelle. Mais malgré des résultats prometteurs, il est apparu un problème inhérent à toutes ces techniques, la difficulté de distinguer la résine propre au collage et les substrats assemblés, métalliques ou non, ou eux-mêmes imprégnés de résine.

Le matériau de liaison, selon l'invention, permet le contrôle par neutronographie, d'un assemblage par collage de pièces, ledit matériau contenant un composé ou alliage de gadollinium ou l'élément pur à une granulométrie égale ou inférieure à celle correspondant à 1000 MESH, la teneur en gadolinium pur étant comprise entre 0,5 à 7,5 % approximativement en poids de la colle.

Les explications et figures données ci-après à titre d'exemple permettront de comprendre comment l'invention peut être réalisée.

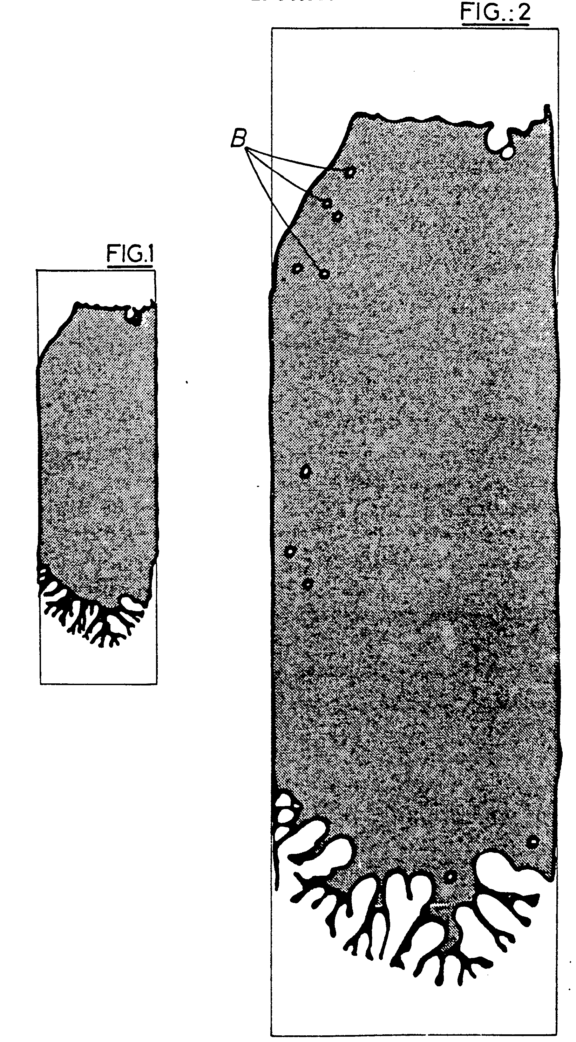

La figure 1 montre à l'échelle 1/1 une neutronographie d'un assemblage de deux plaquettes composites par une colle structurale, conformément à l'invention. La figure 2 est un agrandissement x 2,5 du cliché de la figure 1.

Un procédé de contrôle utilisé pour la détection des défauts, consiste à faire une neutronographie de l'assemblage réalisé avec un matériau de liaison contenant du gadolinium.

Le matériau de liaison dépend des pièces à assembler et peut être une colle ou une résine à un ou plusieurs constituants pour toute sorte d'assemblage.

La teneur en élément neutrophage dispersé dans le matériau de liaison dépend de l'épaisseur de la couche entre les deux pièces à assembler. Dans les collages classiques, cette épaisseur est généralement faible et au maximum de l'ordre de quelques dixièmes de millimètre.

La neutronographie est faite de manière connue sur un film industriel à grain fin et le cliché peut, selon la dimension des défauts que l'on désire détecter, être agrandi afin de rendre facilement observables ou mesurables des défauts de l'ordre du dixième de millimètre.

Cette définition est obtenue avec des poudres de gadolinium de très faible granulométrie (de préférence ≠ 1000 MESH) dispersées dans des colles structurales, telles que celles connues, par exemple, sous les dénominations ARALDITE® (PROCHAL AW 106), EA 934 HYSOL± etc..

Le gadolinium est incorporé, soit sous forme d'élément pur, soit sous forme de composé ou d'alliage, dans des proportions comprises approximativement entre 0,5 et 7,5 % en poids d'élément pur dans le matériau de liaison et ce pour des films de colle compris approximativement entre 0,1 et quelques millimètres.

Les figures 1 et 2 montrent un exemple de contrôle de collage entre deux plaques de matériau composite, les plaques ayant une épaisseur de 2 millimètres et l'épaisseur du film de colle étant de $0,1 \pm 0,05$ mm. La colle "PROCHAL AW 106" est chargée de 7,5 % de gadolinium. Le flux de neutrons est de $3.10^8$ neutrons/cm². La partie basse du cliché montre des ramifications produites par un décollement local en cours de séchage. On voit distinctement sur l'agrandissement des bulles marquées B et dont les dimensions sont de l'ordre du dixième de millimètre.

La teneur en élément neutrophage ou charge sera déterminée par le type d'assemblage, par exemple, métal, composite métal ou composite composite, mais surtout en fonction des épaisseurs et de la taille des pièces à assembler. Toutefois, pour une charge donnée, la plage d'utilisation est très large.

Parmi les défauts d'assemblage qui peuvent être détectés par incorporation d'un élément neutrophage dans les colles, il faut citer:

les décollements,

- les défauts de "mouillage" de remplissage des volumes ou des surfaces d'assemblage, les "bulles", les inhomogénéités d'épaisseurs,

- le mauvais mélange catalyseurs-résines.

### Revendication

Matériau de liaison, pour l'assemblage par collage de pièces, comprenant une dispersion de gadolinium dans une colle ou une résine à un ou plusieurs constituants, ladite dispersion permettant la détection d'éventuels défauts submillimétriques d'assemblage par neutronographie, caractérisé en ce que le gadolinium soit sous forme d'élément pur, soit sur forme l'un composé ou d'un alliage à une granulométrie égale ou inférieure a celle correspondant à 1000 MESH, la teneur en gadolinium pur étant comprise entre 0,5 à 7,5 % approximativement en poids de la colle.

### Patentanspruch

Bindemittel zur Montage von Werkstücken durch Verkleben, das eine Dispersion von Gadolinium in einem Klebstoff oder einem Harz enthält, das aus einem oder mehreren Bestandteilen zusammengesetzt ist, wobei die genannte Dispersion das Auffinden eventueller Fehlstellen der Montageanordnung im Submillimeterbereich durch Neutronenradiographie erlaubt, dadurch gekennzeichnet, daß das Gadolinium, sei es in Form des reinen Elements oder in Form einer Verbindung oder Legierung, eine Kornklassierung aufweist, die 1000 mesh oder weniger entspricht, und der Gehalt an reinem Gadolinium etwa zwischen 0,5 und 7,5 %, bezogen auf das Gewicht des Klebstoffs, beträgt.

### Claim

A joining material for assembling components by glue-bonding, comprising a dispersion of gadolinium in an adhesive or resin with one or more constituents, the said dispersion permitting possible sub-millimetric defects of assembling to be detected by neutron-radiography, characterised in that the gadolinium either under the form of pure element or under the form of a compound or an alloy, has a grain size equal or less than that corresponds to 1000 MESH, the content of pure gadolinium being approximately between 0.5 and 7.5 % by weight, referred to the weight of the joining material.

EP 0 089 261 B1

FIG.1

FIG.:2

B

1